(19)

Europäisches
Patentamt
European
Patent Office
Office européen
des brevets

(11) **EP 4 382 947 A1**

(12) **EUROPEAN PATENT APPLICATION**

(43) Date of publication:
**12.06.2024 Bulletin 2024/24**

(21) Application number: **23211137.7**

(22) Date of filing: **21.11.2023**

(51) International Patent Classification (IPC):
***G01S 5/02*** *(2010.01)*    ***G01S 5/14*** *(2006.01)*
***G01C 21/20*** *(2006.01)*

(52) Cooperative Patent Classification (CPC):
**G01S 5/14; G01S 5/0252; G01S 5/02585;**
**G01S 5/0294;** G01C 21/206; G01S 2205/02;
H04W 4/33

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.11.2022  SE 2251397**

(71) Applicant: **Sony Group Corporation**
**Tokyo 108-0075 (JP)**

(72) Inventor: **ENGSTRÖM, Jimmy**
**Basingstoke, RG22 4SB (GB)**

(74) Representative: **Aera A/S**
**Niels Hemmingsens Gade 10, 5th Floor**
**1153 Copenhagen K (DK)**

(54) **AN INDOOR POSITIONING DEVICE AND RELATED METHOD**

(57)    An indoor positioning device is provided. The indoor positioning device comprises memory circuitry, processor circuitry and an interface. The indoor positioning device is configured to obtain, from one or more sensors of a wireless device, sensor data associated with the wireless device at a first position. The indoor positioning device is configured to obtain, from one or more beacons, measurement data indicative of a distance parameter of the wireless device at the first position. The indoor positioning device is configured to adjust the measurement data by predicting, based on the sensor data and the measurement data, an estimated position of the wireless device. The indoor positioning device is configured to determine, based on the adjusted measurement data and the estimated position of the wireless device, an updated position and/or an updated distance parameter associated with the wireless device.

Fig. 1A

EP 4 382 947 A1

## Description

The present disclosure pertains to the field of wireless communications. The present disclosure relates to an indoor positioning device and related method.

BACKGROUND

Since the introduction of smartphones with built-in Global Navigation Satellite System (GNSS) capabilities, location-based services have become an integral part of many users' lives. However, as soon as a user enters a building, GNSS signals are attenuated, forcing a user device to resort to other methods for positioning itself. Positioning a user device in an indoor environment is a complex problem, where radio-based solutions, using e.g., Wi-Fi or Bluetooth Low Energy (BLE) beacons are heavily affected by signal shadowing caused e.g., by objects blocking the path of the signal.

SUMMARY

Accordingly, there is a need for devices and methods which may mitigate, alleviate, or address the existing shortcomings and may provide an increased accuracy in positioning a wireless device.

An indoor positioning device is provided. The indoor positioning device comprises memory circuitry, processor circuitry and an interface. The indoor positioning device is configured to obtain, from one or more sensors of a wireless device, sensor data associated with the wireless device at a first position. The indoor positioning device is configured to obtain, from one or more beacons, measurement data indicative of a distance parameter of the wireless device at the first position. The indoor positioning device is configured to adjust the measurement data by predicting, based on the sensor data and the measurement data, an estimated position of the wireless device. The indoor positioning device is configured to determine, based on the adjusted measurement data and the estimated position of the wireless device, an updated position and/or an updated distance parameter associated with the wireless device.

A method, performed by an indoor positioning device, is disclosed. The method comprises obtaining, from one or more sensors of a wireless device, sensor data associated with the wireless device at a first position. The method comprises obtaining, from one or more beacons, measurement data indicative of a distance parameter of the wireless device at the first position. The method comprises adjusting the measurement data by predicting, based on the sensor data and the measurement data, an estimated position of the wireless device. The method comprises determining, based on the adjusted measurement data and the estimated position of the wireless device, an updated position and/or an updated distance parameter associated with the wireless device.

It is an advantage of the present disclosure that the disclosed indoor positioning device and the disclosed method achieves an improved accuracy in their positioning of the wireless device indoors. For example, the disclosed indoor positioning device and the disclosed method may achieve higher accuracy than each of fingerprinting, multilateration, and sensor fusion approaches on their own by predicting the estimated position of the wireless device for adjusting the measurement data (e.g., via online learning a local propagation noise and/or shadowing noise while running sensor fusion). It may be appreciated that the disclosed technique allows to rely on location of beacons (e.g., no need for dedicated training data) while learning how objects affect the signal propagation in real-time, thereby increasing positioning accuracy. In other words, the disclosed technique allows learning the radio propagation behaviour of an indoor space, while still providing adequate positioning accuracy on the fly. Further, the disclosed technique is capable of scaling quicker than conventional methods as the disclosed technique allows reducing much of manual labour usually needed for deploying a positioning system with conventional methods.

BRIEF DESCRIPTION OF THE DRAWINGS

The above and other features and advantages of the present disclosure will become readily apparent to those skilled in the art by the following detailed description of examples thereof with reference to the attached drawings, in which:

Figs. 1A-1C are diagrams illustrating examples of radio propagation in an indoor environment,
Figs. 2A-B are diagrams illustrating example systems according to this disclosure,
Figs. 3A-3B are diagrams illustrating schematically example processes for positioning a wireless device according to this disclosure,
Fig. 4 is a block diagram illustrating an example indoor positioning device according to this disclosure,
Figs. 5A-B show a flow-chart illustrating an example method, performed by an indoor positioning device, for positioning a wireless device, according to this disclosure, and
Fig. 6 is a graph illustrating a plurality of cumulative density functions associated with a plurality of positioning techniques of a positioning error for illustrating performance results.

DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example needs not have all the aspects or advantages shown. An aspect or an advantage described in conjunction with a particular example is not necessarily limited to that example and can be practiced in any other examples even if not so illustrated, or if not so explicitly described.

The figures are schematic and simplified for clarity, and they merely show details which aid understanding the disclosure, while other details have been left out. Throughout, the same reference numerals are used for identical or corresponding parts.

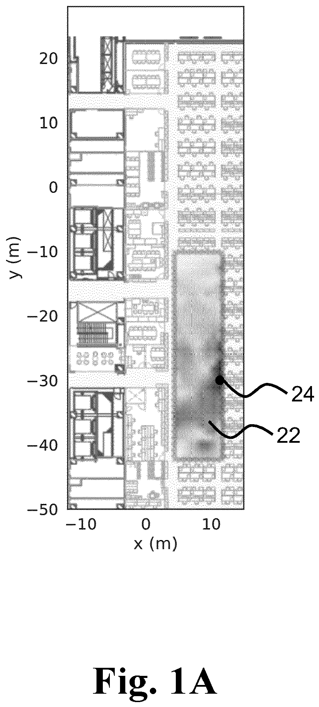

Figs. 1A-1C are diagrams illustrating examples of radio propagation in an indoor environment. Figs. 1A-C show the indoor environment with an x-axis expressed in meters and y-axis expressed in meters.

Indoor radio signals are affected by multipath propagation and shadowing. An example can be a signal that is both received with line-of-sight but also by being reflected off other surfaces before being received. Depending on the phase shift, this may increase or decrease the received signal strength (RSS).

Fig. 1A shows a beacon 24 placed in an open space and a representation 22 of interpolated RSS measurements for beacon 24. In Fig.1A, the signal strength measurements illustrated by 22 are shown in a 12 × 72 m office landscape for a BLE beacon. Even though this is a fairly open space, populated with desks and dividers, the signal strength is affected by reflections on the left side, giving higher RSS values than expected. If the measurements are used in a multilateration or sensor fusion method, the inflated RSS values are likely to lead to underestimated distances. The placement of the beacons has a significant impact on the signal strength.

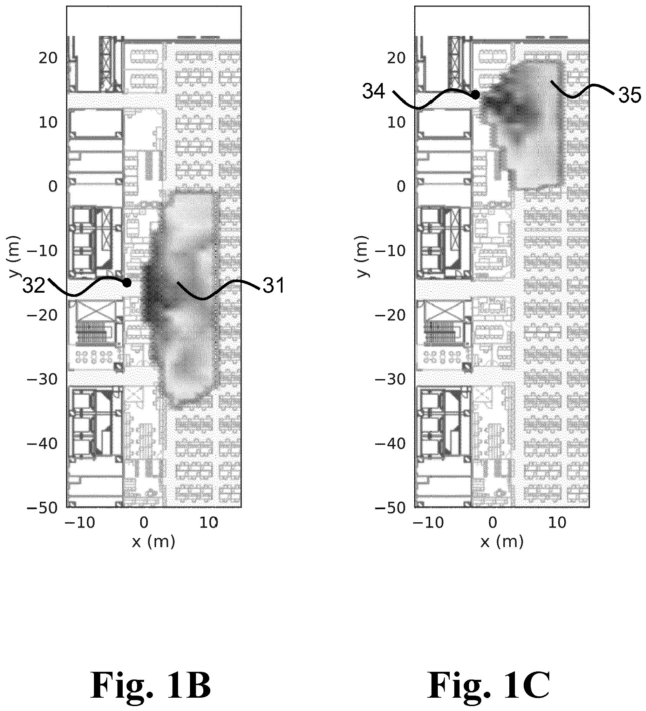

For example, Fig. 1B shows a beacon 32 placed in a corridor and the representation 31 shows that the signals from the beacon 32 do not propagate well outside a very narrow path. The RSS is higher in the narrow path than in the rest of the space.

For example, Fig. 1C shows a beacon 34 placed in a corridor and the representation 35 shows that the signals from the beacon 32 do not propagate well outside an area much smaller than that of beacon 24 of Fig. 1A.

It is to be noted that the body of a user also affects the RSS. This disclosure allows tracking the orientation of the user based on sensor data while measuring the RSS values. For example, when the user is heading towards the beacon, the signal becomes much stronger, as the signal is not attenuated by the large amount of water in the body. This present disclosure allows for compensation in positioning to include the user direction.

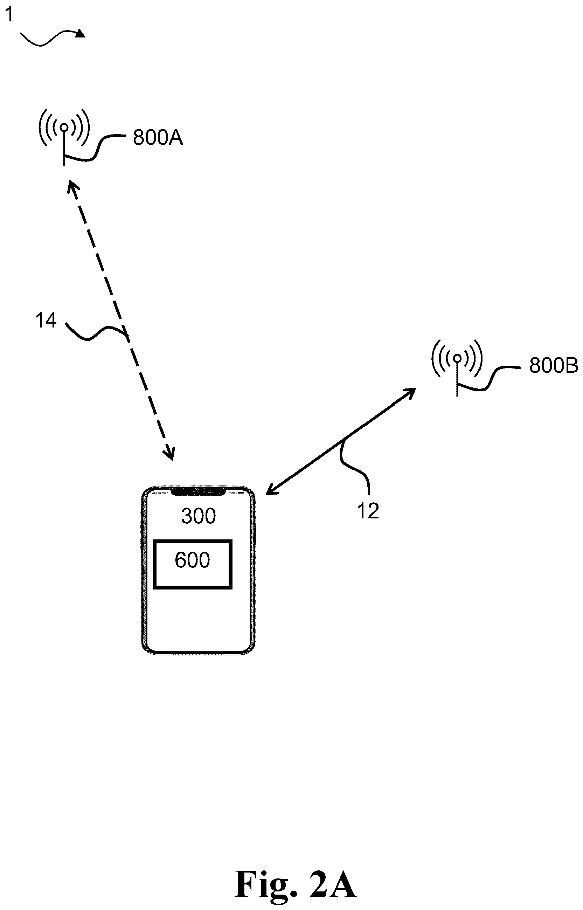

Figs. 2A-B are diagrams illustrating example systems 1, 2 according to this disclosure. As discussed in detail herein, the present disclosure relates to a system 1, 2, such as an indoor positioning system, e.g., based on Bluetooth, BLE, and/or Wireless Local Area Network (WLAN) and/or Ultra-wideband (UWB) and/or millimeter wave communications (such as 5G and/or 6G, such as in frequency band (24-66 GHz), such as up to 3 THz) and/or other short-range communication systems. It may be noted that the higher the frequency of operation, the more sensitive the signal is to shadowing and/or occlusion. It may be appreciated that the disclosed technique achieves an improved accuracy in high frequency bands, such as 24-66 GHz, and optionally up to 3 THz.

Referring to Fig. 2A, the system 1 comprises one or more of: example beacons 800A, 800B, and an example wireless device 300 including an example indoor positioning device 600 disclosed herein. In some examples, the system 1 comprises one or more wireless devices 300 and/or one or more beacons 800A, 800B.

A wireless device may refer to one or more of: a mobile device and a user equipment, UE. The wireless device can be seen as a user device, such as an electronic device configured to be operated by a user. The mobile device can be a tablet, a smartphone, a laptop, and/or any other equipment.

A beacon may be seen as a stationary device in an environment that supports bidirectional radio communication. The beacon can be a transmitter, such as an anchor and/or an access point. In one or more examples, a beacon can be seen as a device with a known location placed in an environment which supports bidirectional radio communication. Stated differently, a beacon may be seen as a transmitting node and/or receiving device. A beacon may be seen as a stationary device for Bluetooth Low Energy, BLE, positioning. An anchor may be seen as a stationary device for Ultra-Wideband positioning. An access point may be seen as a stationary device for Wi-Fi positioning.

The indoor positioning device 600 (and the wireless device 300) may be configured to communicate with the one or more beacons 800, 800A via a wireless link (or radio access link) 12,14.

In Fig. 2A, the indoor positioning device 600 is part of the wireless device 300. The indoor positioning device 600 is configured to obtain, from one or more sensors of the wireless device 300, sensor data associated with the wireless device 300 at a first position. The indoor positioning device 600 is configured to obtain, from one or more beacons 800A, 800B, measurement data indicative of a distance parameter of the wireless device 300 at the first position. The indoor positioning device 600 is configured to adjust the measurement data by predicting, based on the sensor data and the measurement data, an estimated position of the wireless device 300. The indoor positioning device 600 is configured to determine, based on the adjusted measurement data and the estimated position of the wireless device, an updated position and/or an updated distance parameter associated with the wireless device 300.

In other words, the wireless device 300 (via the indoor positioning device 600) can obtain, from one or more sensors of the wireless device 300, sensor data associated with the wireless device 300 at a first position. The wireless device 300 (via the indoor positioning device 600) can obtain, from one or more beacons 800A, 800B, measurement data indicative of a distance parameter of the wireless device 300 at the first position. The wireless device 300 (via the indoor positioning device 600) can adjust the measurement data by predicting, based on the sensor data and the measurement data, an estimated position of the wireless device 300. The wireless device 300 (via the indoor positioning device 600) can determine, based on the adjusted measurement data and the estimated position of the wireless device, an updated position and/or an updated distance parameter associated with the wireless device 300.

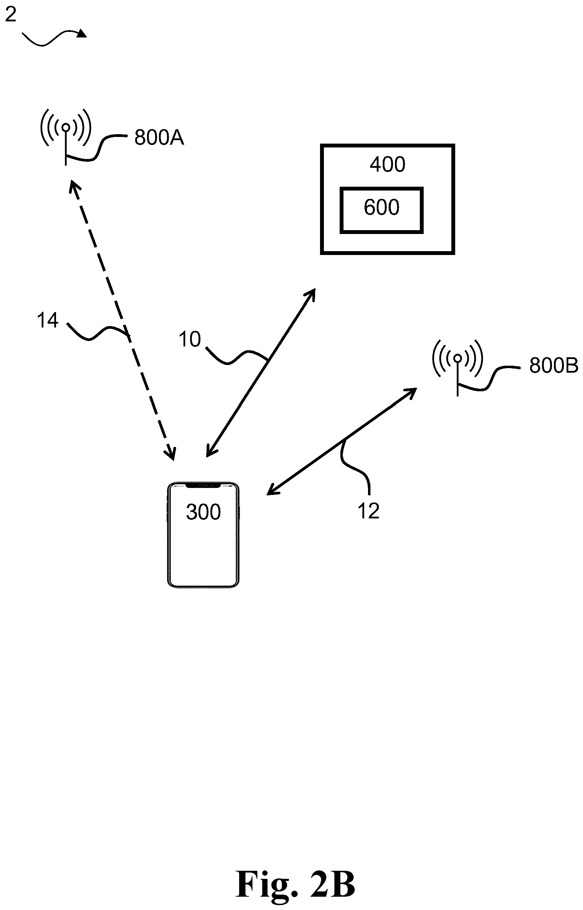

Fig. 2B shows a system 2 for indoor positioning of a wireless device 300. The system 2 comprises one or more of: example beacons 800A, 800B, an example wireless device 300 and a server device 400 including an indoor positioning device 600.

The wireless device 300 may be configured to communicate via a wireless link and/or a wired connection 10 with the server device 400. For example, the wireless device 300 may be configured to communicate with the server device 400 via a wireless link to a network node (e.g., radio access network node and/or an access point) and via a wired connection from the network node to the server device 400.

The wireless device 300 may be configured to communicate with the one or more beacons 800, 800A via a wireless link (or radio access link) 12,14.

The indoor positioning device 600 (and the server device 400) may be configured to communicate with the one or more beacons 800, 800A via a wireless and/or wired link.

In Fig. 2A, the indoor positioning device 600 is part of the server device 400. The indoor positioning device 600 is configured to obtain, from the wireless device 300, sensor data associated with the wireless device 300 at a first position. The indoor positioning device 600 is configured to obtain, from one or more beacons 800A, 800B (e.g., via the wireless device 300 or directly), measurement data indicative of a distance parameter of the wireless device 300 at the first position. The indoor positioning device 600 is configured to adjust the measurement data by predicting, based on the sensor data and the measurement data, an estimated position of the wireless device 300. The indoor positioning device 600 is configured to determine, based on the adjusted measurement data and the estimated position of the wireless device, an updated position and/or an updated distance parameter associated with the wireless device 300.

In other words, the server device 400 (via the indoor positioning device 600) can obtain, from one or more sensors of the wireless device 300, sensor data associated with the wireless device 300 at a first position. The server device 400 (via the indoor positioning device 600) can obtain, from one or more beacons 800A, 800B, measurement data indicative of a distance parameter of the wireless device 300 at the first position. The server device 400 (via the indoor positioning device 600) can adjust the measurement data by predicting, based on the sensor data and the measurement data, an estimated position of the wireless device 300. The server device 400 (via the indoor positioning device 600) can determine, based on the adjusted measurement data and the estimated position of the wireless device, an updated position and/or an updated distance parameter associated with the wireless device 300.

The disclosed technique may achieve higher accuracy than each of fingerprinting, multilateration, and sensor fusion approaches on their own by predicting the estimated position of the wireless device for adjusting the measurement data (e.g., via online learning a local propagation noise and/or shadowing noise while running sensor fusion). It may be noted that sensor fusion can provide a more robust positioning. A combination of sensor fusion and a fingerprinting data repository of an indoor space, that is complete, and recently updated, may be seen as the most optimal combination. However, creating such a data repository is time consuming at installation time, and requires updates over time, as the environment of the indoor space changes. In actual deployments, the data repository is not complete and up-to-date and provides just a collected set of fingerprints covering "most" of the indoor space. For example, when areas outside the collected fingerprints are entered by the wireless device, or furniture or drywalls have been rearranged, the fingerprinting technique alone suffers in accuracy. The disclosed technique improves accuracy of the positioning of the wireless device in actual "real life" deployments. Further, the disclosed technique is capable of scaling quicker than fingerprinting alone as fingerprinting requires time and resources.

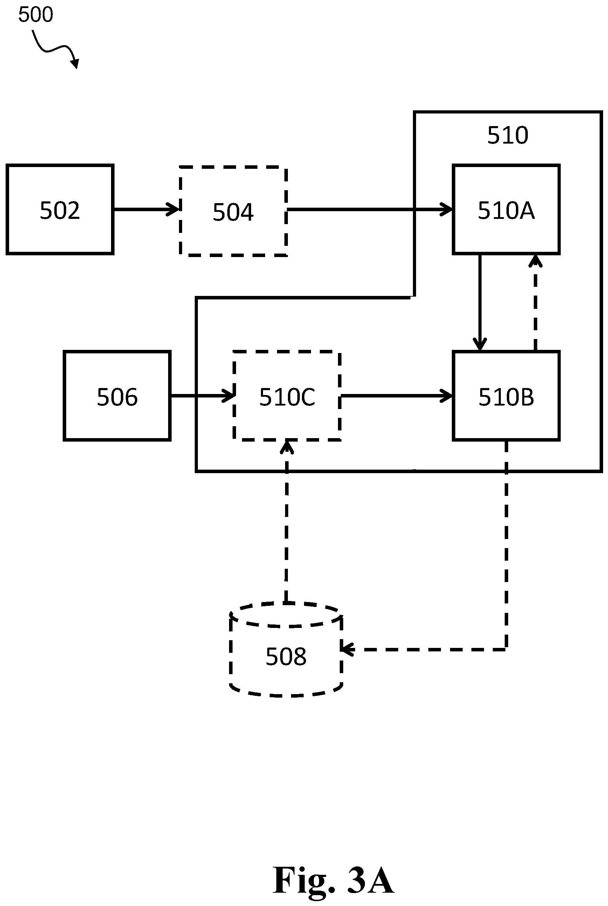

Figs. 3A-3B are diagrams illustrating schematically example processes for positioning a wireless device according to this disclosure.

Fig. 3A shows process 500 which can be carried out by the disclosed indoor positioning device for positioning a wireless device.

The indoor positioning device obtains in 502 sensor data associated with the wireless device at a first position. The sensor data can be obtained from one or more sensors of the wireless device, such as from Inertia Measurement Unit, IMU, accelerometer, gyroscope, magnetometer and/or a pressure sensor. For example, the sensor data can include accelerometer data, gyroscope data, IMU data, pressure data and/or magnetometer data. The sensor data from IMU can be used to track the orientation of the user, such as based on IMU data fused and/or filtered according to the disclosed technique.

The sensor data can optionally be processed in 504 using Pedestrian Dead Reckoning (PDR) technique for estimating one or more of: speed, distance, turning speed (such as in radian per time unit), and direction (e.g., in degrees). The processing 504 can be performed in many ways, e.g., using a step detector, a step lens estimator, and/or neural network.

The indoor positioning device obtains in 506 measurement data indicative of a distance parameter of the wireless device at the first position. For example, the distance parameter comprises a received signal strength (e.g., RSS illustrated in Figs. 1A-C) and/or a distance estimate (e.g., using UWB, such as UWB ranging values).

The sensor data (and/or the sensor data processed in 504) can be used to adjust, in 510, the measurement data obtained in 506. For example, in 510A, an estimated position of the wireless device can be predicted based on the measurement data and the sensor data, such as using a filter, such as a Kalman filter, an unscented Kalman filter, and/or a Particle filter. The estimated position of the wireless device can be provided for updating, in 51 0B, the position and/or the distance parameter associated with the wireless device. The prediction can also use the previously updated position and/or the previously updated distance parameter associated with the wireless device.

The updated position of the wireless device and/or the updated distance parameter associated with the wireless device can be used by the indoor positioning device to populate a data repository 508 (such as a database and/or a memory part) configured to store and/or provide measurement data for each beacon and/or location. The data repository can be accessed to obtain stored measurement data for future adjustments (such as in 510C) of the measurement data.

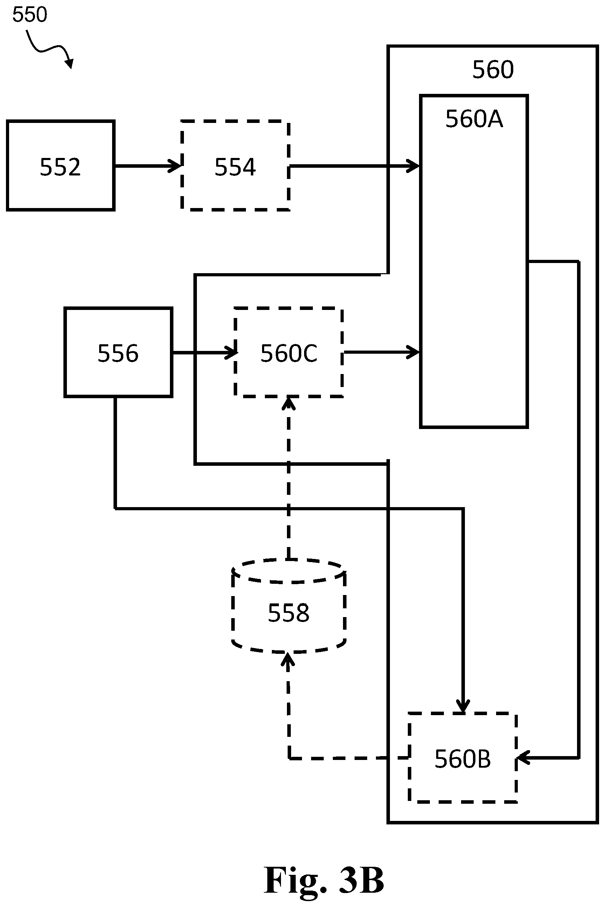

Fig. 3B shows process 550 which can be carried out by the disclosed indoor positioning device for positioning a wireless device.

The indoor positioning device obtains in 552 sensor data associated with the wireless device at a first position. The sensor data can be obtained from one or more sensors of the wireless device, as discussed in Fig. 3A. The sensor data can optionally be processed in 554 using Pedestrian Dead Reckoning, PDR, technique for estimating one or more of: speed, distance, turning speed (e.g., in radian per time unit), and direction (e.g., in degrees). The indoor positioning device obtains in 556 measurement data indicative of a distance parameter of the wireless device at the first position.

The sensor data (and/or the sensor data processed in 554) can be used to adjust, in 560, the measurement data obtained in 556. For example, in 560A, an estimated position of the wireless device can be predicted based on the measurement data and the sensor data using a neural network, such as a recurrent neural network, as an estimation function. For example, in 560B, the estimated position of the wireless device can be used to compare the actual measurement data obtained in 556 with expected measurement data derived from 560A. For example, the comparison can be used to update the position and/or the distance parameter associated with the wireless device.

The updated position of the wireless device and/or the updated distance parameter associated with the wireless device can be used by the indoor positioning device to populate a data structure 558 (such as a database and/or a memory part) configured to store and/or provide measurement data. The data structure can be accessed to obtain stored measurement data for future adjustments (e.g., in 560C) of the measurement data.

In an illustrative example where the disclosed technique is applied, a reference position can be assigned to each location with associated measurements (e.g., measurement data, such as received signal strength) by measuring the received signal strength at different locations in an indoor environment. Indoor signal strength measurements can be quite noisy (see Figs. 1A-C), as the received signal strength can be affected by several conditions, such as shadowing, multipath, and reflections. These conditions vary significantly between nearby locations within indoor environments. In a multilateration approach, the shadowing and multipath noise can be significant sources of errors. The disclosed technique includes, inter alia, fingerprinting which can benefit from the local disturbances of the signal instead of being negatively affected.

Fingerprinting can be based on a classifier. For example, the classifier can be a k-Nearest Neighbor (k-NN) regression, where the reference positions of the k-nearest neighbors are weighted to produce a continuous estimate. The training of a k-NN involves storing the measurements and their corresponding reference positions in a database. $q_0$ denotes a query point and $v_i$ denotes training vectors for $i = 1, ..., k$. The regression can be done by comparing the query vector $q_i$ with all entries in the database, and then choose the k-closest ones according to a metric, such as the Euclidean distance $d_i = \|v_i - q_0\|_2$. The k-NN regressor allows achieving satisfactory results in indoor positioning scenarios.

Let $M$ denote the number of dimensions of the system, and let $N$ denote the number of transmitters. To derive the distance parameter, the measurement data (such as measured RSS values) can be converted to distance estimates (such as range estimates) by applying a path loss model, such as the log-distance-path-loss model where the path loss PL can be expressed as,

$$PL = PL_0 + 10\gamma \log_{10} \frac{d}{d_0} + \chi_g, \quad (1)$$

where $d_0$ and $PL_0$ denote reference distance and its corresponding path loss, respectively; $\gamma$ denotes the path loss exponent; $d$ denotes a current distance parameter; and $\chi_g$ denotes fading of a signal, which follows a zero mean gaussian distribution.

To estimate the distance parameter, $d_0$ is assumed to be measured at 1 m and that $\chi_g$ has zero mean, thereby simplifying the expression to e.g.:

$$d = 10\frac{PL_0 - PL}{10\gamma}, \ (2)$$

For example, to estimate the wireless device position in $M = 2$ dimensions, where the number of transmitters $N > 2$, let us define vector $U_t = [x_t, y_t]$, which is the wireless device position at time t. The $N$ known beacon locations are placed in a $N \times M$ matrix for example as:

$$B = \begin{bmatrix} x_0 & y_0 \\ \vdots & \vdots \\ x_{N-1} & y_{N-1} \end{bmatrix}. \ (3)$$

For example, $R_N = [r_0, r_1, \ldots, r_{N-1}]$ denotes the measurement data obtained from one or more beacons, such as $N$ beacons. Each element of $R_N$ can be either empty or real valued, such as $r_i = \{\varnothing, R\}$, depending on whether a signal is received or not from a beacon.

The position of the wireless device $U$ can be estimated by using a non-linear optimization method, such as limited memory Broyden-Fletcher-Goldfarb-Shanno, L-BFGS, which varies $U$ to minimize a cost function, such as:

$$\underset{U}{\arg\min}\, cf(U, B, R) = \frac{\sum D^{-1}||U - B||_2 - D}{\sum D^{-1}} \ (4)$$

where

$$D = 10^{\frac{PL_0 - R}{10\gamma}} \ (5)$$

In some examples, other cost functions can be used.

For example, the inverted distance can be used to weigh the importance of the measurements as the amount of noise increases with distance. It is noted that the distance estimate can be affected by the indoor environment, and the $\gamma$ constant is only used as a rough approximation of the indoor path loss.

In some examples, an estimation function can be used by the disclosed indoor positioning device, e.g., so that multiple noisy sources can be combined to achieve a result with less noise than each source's own. The estimation function can be based on a Kalman Filter (KF), and/or a variant of Extended Kalman Filter (EKF) and/or Unscented Kalman Filter (UKF), and/or a particle filter. For example, the Kalman filter recursively estimates the state (e.g., the position of the wireless device) and its covariance through a series of alternating predictions and updates. It may be appreciated that a KF-based estimation function fits well with how the sensor data is used, and with that measurements can be obtained continuously. It may be appreciated that with a KF, the current state (e.g., the current position of the wireless device) and its covariance are stored, thereby reducing the memory footprint. In some examples, the extended Kalman filter is used as the estimation function and allows generic functions in the predictor, as long as these are differentiable. In some examples, UKF is used as the estimation function and goes one step further and removes the requirement on the predictor to be differentiable but instead introduces the estimation of the mean and covariance. The estimation of the mean and the covariance can be performed by sampling a small set of carefully chosen sigma points. For example, the sigma points can include a set of discretely sampled points that can be used to parameterize the mean and covariance of a non-linear transform used in a KF, such as of UKF, e.g., provided in Julier and Uhlmann, "A new extension of the Kalman filter to non-linear systems", 1997. For example, the unscented transform (with its sigma points) can be used to estimate the mean and covariance of the target distribution once a non-linear transform has been applied to the input data. For example, the sigma points can be sampled around the mean of the input data points in a specific way, so that afterwards the target mean and covariance can be estimated.

In some examples, states as $X = [u_x, u_y, u_\theta]$ represent the x, y position and the direction where the user is heading. For example, sensor data (such as, IMU data) can be used to predict the next position of the wireless device. In the update phase, the measurement data (such as RSS measurements) can be converted to distance parameters as in Equation 2. In some examples, the distance parameter (e.g., including distance estimate) is only valid in the average sense, as walls, doors, and objects inflict shadowing of the signal and may heavily affect the received signal strength. This disclosure proposes performing local adjustments to the measurement data (e.g., RSS values), optionally as soon as sufficient measurement data and information are collected. In some examples, the measurement data and information can be seen as training data. In some examples, the measurement data can be collected without applying any actual training in the machine learning sense.

In some examples where the disclosed technique is applied, the measurement data (e.g., RSS values) are compensated by using a fingerprinting classifier trained with measurement data collected at known locations on the indoor environment. The compensated measurement data (e.g., RSS values) can then be used to adjust the next measurement data. It may be appreciated that the disclosed technique can handle locations that are outside training data boundaries by using multilateration and fingerprinting. In some examples, the classifier is a k-NN regressor, which has been trained on a reference dataset with known locations of beacons and position of the wireless device. The disclosed indoor positioning device adjusts the measurement data by predicting an estimated position of the wireless device (e.g., a next position, and/or a corrected position, and/or a next state). The estimated position can be determined using a Pedestrian Dead Reckoning (PDR) function pdr(), which converts the sensor data into sensor estimates (such as distance and/or turning estimates). The estimated position of the wireless device $\hat{x}_t$ may be expressed as,

$$\hat{x}_t = \text{predict}\big(x_{t-1}, \text{pdr}(S_t)\big), \quad (6)$$

where $x_{t-1}$ denotes the first position of the wireless device; $S_t$ denotes the sensor data associated with the wireless device at the first position $x_{t-1}$. The sensor data $S_t$ may be obtained from the one or more sensors of the wireless device between $t - 1$ and $t$; and $\text{pdr}(S_t)$ denotes one or more sensor estimates by applying a PDR function to the sensor data $S_t$.

In some examples, the measurement data can be adjusted by generating first expected measurement data $\hat{R}_t$ (such as expected RSS values at that location) using a fingerprinting classifier applied to the measurement data. For example, the first expected measurement data $\hat{R}_t$ is estimated using a weighted sum of the k-NN in the training data, where the distance parameter is $\|\hat{x}_t - F\|_2$, $F$ representing the ground truth location of a particular fingerprint. In some examples, for predicting the estimated position, an estimation function, such as a Kalman filter, can be used where $R_t$ is updated or replaced by $\hat{R}_t$ in for example:

$$x_t = \text{update}\big(\hat{x}_t, R_{t,n}\big), \quad (7)$$

where $\hat{x}_t$ denotes estimated position of the wireless device; and $R_{t,n}$ denotes the measurement data obtained at a time $t$, in which $R_{t,n} = [r_{t,0}, r_{t,1}, \dots, r_{t,N-1}]$ denotes the measurement data obtained from one or more beacons, such as from $N$ beacons at a time $t$. The first expected measurement data may be given by $R_{t,n}$ which is generated at a time $t$.

In some examples, the measurement data can be adjusted by generating second expected measurement data using a propagation model applied to the measurement data. For example, the current position may be too far away from the positions where training data has been collected. The second expected measurement data is used for this adjustment. In one or more examples, the indoor positioning device can generate the second expected measurement data using a propagation model, such as a path loss model of Equation 1. The propagation model may comprise an ITU indoor propagation model and/or ITU transmission loss models (in ITU-R P.1238-11) and/or a log distance path loss model, and/or polynomial curve fitting to the measurement data for a specific indoor space and/or any other suitable method. The second expected measurement data (such as, at a time $t$) which can be calculated by Equation 3 and distance parameter $d_i = \|\hat{x}_t - B_i\|_2$, where $i = 0, \dots, N - 1$, that denotes the distance parameter between the estimated position of the wireless device $\hat{x}_t$ and the location of the one or more beacons $B_i$. The updated position of the wireless device may be expressed as,

$$x_t = \text{update}\big(\hat{x}_t, R_{t,n} + \hat{P}L_{t,n} - \hat{R}_{t,n}\big), \quad (8)$$

where $\hat{x}_t$ denotes estimated position of the wireless device; $\hat{P}L_{t,n}$ denotes the pathloss and/or signal attenuation at time $t$; $R_{t,n}$ denotes the first expected measurement data generated at time $t$; and $R_{t,n}$ denotes the measurement data obtained from the one or more beacons at a time $t$, in which $R_{t,n} = [r_{t,0}, r_{t,1}, \dots, r_{t,N-1}]$ denotes the measurement data obtained from one or more beacons, such as $N$ beacons at a time $t$.

The adjustment of the measurement data allows for example to adjust the measurement data to higher RSS values (thus shorter distances) when simulated measurement data (e.g., RSS values) are higher than the measurement data collected (and optionally stored in a database). For example, this can happen when objects block the signal path, thereby reducing the measured RSS values of the measurement data. This allows for an improved accuracy over conventional methods that would overestimate the distance to the shadowed beacon.

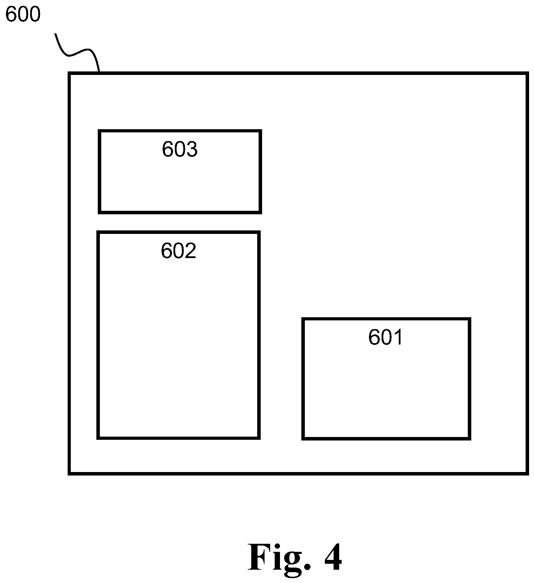

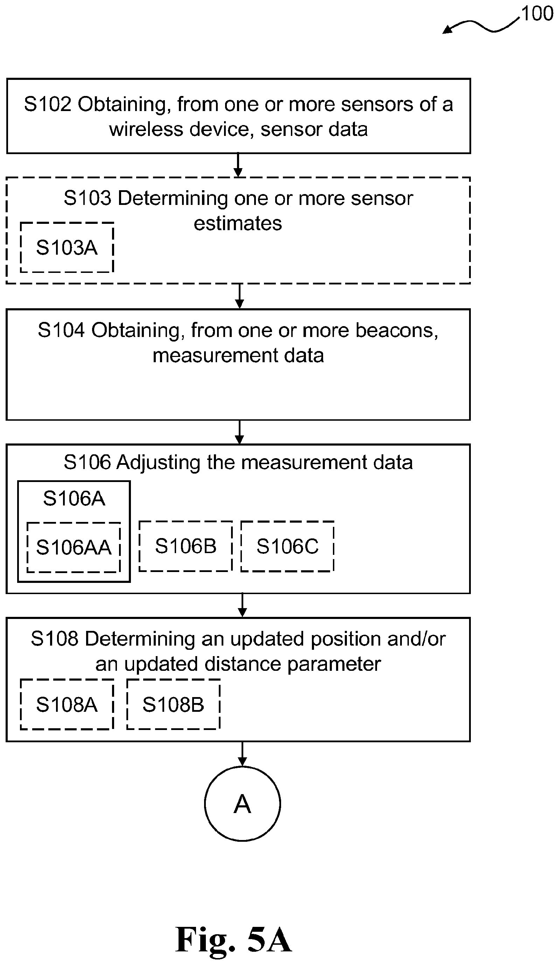

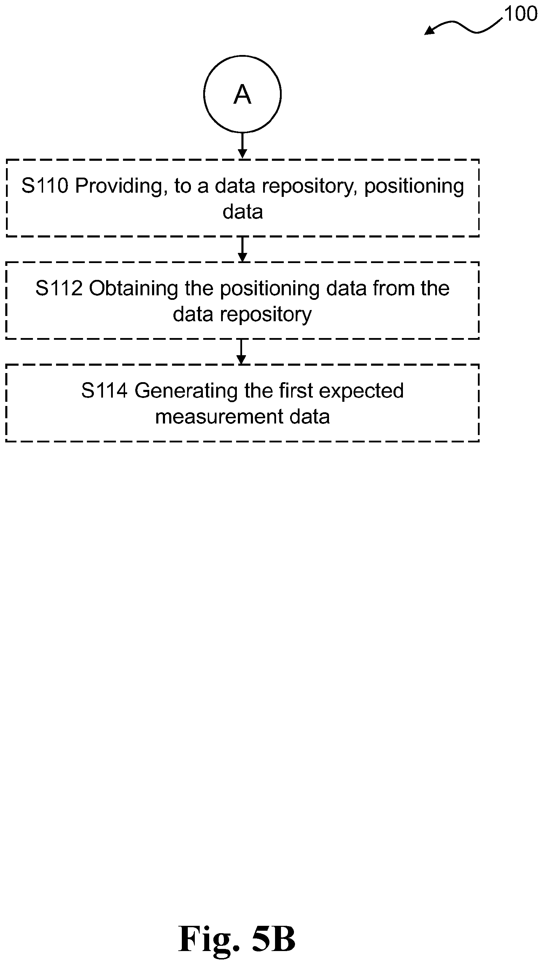

Fig. 4 shows a block diagram of an indoor positioning device 600 according to the disclosure. The indoor positioning device 600 comprises memory circuitry 601, processor circuitry 602, and an interface 603. The indoor positioning device 600 may be configured to perform any of the methods disclosed in Fig. 5. In other words, the indoor positioning device 600 may be configured for positioning a wireless device.

In one or more example indoor positioning devices, the indoor positioning device 600 is a user device and/or a server device. In some examples, the indoor positioning device 600 is a wireless device (such as, a user device) comprising processor circuitry configured to determine its position. For example, the indoor positioning device 600 is part of a wireless device comprising processor circuitry configured to determine its position, as illustrated in Fig. 2A.

In some examples, the indoor positioning device 600 is a server device comprising processor circuitry configured to determine a position associated with a wireless device. For example, the indoor positioning device 600 is part of a server device comprising processor circuitry configured to determine a position associated with a wireless device. As illustrated in Fig. 2B, a server device (such as server device 600) may communicate with a wireless device (such as, wireless device 300) through a wireless link (such as, wireless link 16) and provide the wireless device with its position.

The interface 603 comprises a wireless interface and/or a wired interface. The interface 603 is configured for wired and/or wireless communications. The wireless communication can be performed using a system, such as a short-range communication system (e.g., Bluetooth, BLE, WLAN, UWB) and/or a cellular system.

The indoor positioning device 600 is configured to obtain (such as, via the processor circuitry 602 and/or interface 603), from one or more sensors of a wireless device, sensor data associated with the wireless device at a first position.

In one or more examples, the first position associated with the wireless device can be seen as an initial position. In one or more examples, the first position associated with the wireless device can be seen as a position of the wireless device seen as "real" position of the wireless device. In one or more examples, the first position associated with the wireless device can be a previous position associated with the wireless device. For example, the first position of the wireless device may be denoted $x_{t-1}$ of Equation 6. In some examples, the first position can be one or more of: a random position, a predetermined position (such as, (0,0,0)), a position based on a guess, a position based on a multilateration procedure, and/or a position based on a fingerprinting procedure (when there is pre-collected data).

In one or more example indoor positioning devices, the sensor data comprises one or more sensor estimates associated with the wireless device. In one or more example indoor positioning devices, the one or more sensor estimates comprise one or more of: a speed (e.g., in meters/second), a distance (e.g., in meters), and a direction (e.g., in degrees). The one or more sensor estimates may comprise a turning speed (radians/second), such as a rotational speed and/or a rate of rotation. In one or more example indoor positioning devices, the indoor positioning device 600 is configured to determine, based on the sensor data, the one or more sensor estimates. In one or more example indoor positioning devices, the indoor positioning device 600 is configured to determine the one or more sensor estimates by applying a Pedestrian Dead Reckoning, PDR, function to the sensor data. In one or more examples, the PDR function can comprise one or more of: a step detector, a step length estimator, and a neural network. For example, the PDR function uses the sensor data obtained from the one or more sensors of the wireless device to generate the one or more sensor estimates. In other words, the PDR function uses the sensor data to estimate a speed and/or a distance and/or a turning speed and/or a direction (such as, a heading) associated with the wireless device (such as, a moving wireless device). In some examples, the sensor data can include sensor data collected between a first time instance and a second time instance. The first time instance can be associated with the first position.

The indoor positioning device 600 is configured to obtain (such as, via the processor circuitry 602 and/or interface 603), from one or more beacons, measurement data indicative of a distance parameter of the wireless device at the first position. In one or more examples, a beacon sends signals to the indoor positioning device 600 which measures the signals to obtain measurement data indicative of a distance parameter of the wireless device at the first position. Put differently, the beacon may allow the indoor positioning device 600 to measure signal strength (forming the measurement data) which is used to determine a distance parameter between the beacon and the wireless device at the first position. The measurement data may be obtained (e.g., determined, generated, and/or received) by the indoor positioning device 600 through communication with the one or more beacons.

In one or more example indoor positioning devices, the distance parameter comprises a received signal strength, RSS, and/or a distance estimate. In one or more examples, the measurement data comprises the distance parameter. In one or more examples, the RSS is indicative of a strength of a received signal measured at a receiving node. For example, the RSS may be associated with a communication between a beacon and the wireless device. The RSS can be in form of RSS indicator (RSSI). In one or more examples, the distance estimate is provided using UWB of a wireless device, such as UWB ranging values. The RSS and/or the distance estimate are for example used to derive a distance parameter in spatial units. For example, the indoor positioning device 600 receives, from one or more beacons (such as, one or more anchors), one or more distance parameters (such as, one or more distance measurements) between the one or more beacons and the wireless device. The indoor positioning device 600 may determine, based on the one or more distance parameters and known locations of the one or more beacons, a position of the wireless device.

The indoor positioning device 600 is configured to adjust (such as, via the processor circuitry 602) the measurement data by predicting, based on the sensor data and the measurement data, an estimated position of the wireless device. In other words, the indoor positioning device 600 adjusts the measurement data based on the prediction of an estimated position of the wireless device which can be determined based on the sensor data and the measurement data. In one or more examples, the indoor positioning device 600 is configured to predict, based on the sensor data and the measurement data, the estimated position of the wireless device. In some examples, the indoor positioning device 600 predicts, based on the sensor data and the measurement data (which are both associated with the first position), the estimated position of the wireless device. In one or more example indoor positioning devices, the prediction of the estimated position of the wireless device comprises applying an estimation function to the sensor data and the measurement data associated with the first position of the wireless device. The estimated position may be a second position. The estimated position may be seen as the current position while the first position is the previous position. This allows for example to fine-tune and/or compensate the measurement data so that errors can be reduced. In one or more examples, the indoor positioning device 600 predicts the estimated position based on the one or more sensor estimates.

In one or more example indoor positioning devices, the indoor positioning device 600 is configured to adjust the measurement data by generating first expected measurement data using a fingerprinting classifier applied to the measurement data. In one or more example indoor positioning devices, the indoor positioning device 600 is configured to adjust the measurement data by generating second expected measurement data using a propagation model applied to the measurement data. For example, the indoor positioning device is configured to compare the first position and the estimated position. For example, the IP device is configured to determine whether the comparison between the first position and the estimated position does not meet a criterion. For example, when the comparison between the first position and the estimated position does not meet a criterion, the second expected measurement data is generated.

In one or more example indoor positioning devices, the prediction of the estimated position of the wireless device comprises applying an estimation function to the sensor data and the measurement data. In one or more example indoor positioning devices, the estimation function comprises one or more of: a Kalman Filter, an Unscented Kalman Filter, an Extended Kalman Filter, a Particle filter, and a neural network.

In some examples, the estimation function is based on an Unscented Kalman Filter, as illustrated in Fig. 3B.

In one or more examples, the indoor positioning device 600 is configured to adjust, based on the estimated position of the wireless device, the measurement data.

The indoor positioning device 600 is configured to determine (such as, via the processor circuitry 602), based on the adjusted measurement data and the estimated position of the wireless device, an updated position and/or an updated distance parameter associated with the wireless device. In other words, the positioning device 600 updates (such as, via the processor circuitry 602), based on the adjusted measurement data and the estimated position of the wireless device, the position and/or an updated distance parameter associated with the wireless device. In one or more examples, the indoor positioning device 600 may generate and/or infer, based on the updated distance parameter, the updated position of the wireless device. The updated position of the wireless device can be denoted a third position.

In one or more example indoor positioning devices, the prediction of the estimated position of the wireless device comprises applying an estimation function to the sensor data and the measurement data. In one or more example indoor positioning devices, the estimation function comprises one or more of: a Kalman Filter, an Unscented Kalman Filter, an Extended Kalman Filter, a Particle filter, and a neural network. In one or more examples, the estimation function comprises one or more of: a Kalman Filter, an Unscented Kalman Filter, and an Extended Kalman Filter.

In one or more examples, the estimation function comprises a neural network. For example, the neural network can be a recurrent neural network node, as illustrated in Fig. 3B. In one or more example indoor positioning devices, the estimation function takes as input the first position of the wireless device. For example, the indoor positioning device determines an estimated position of the wireless device by applying a neural network to the sensor data and the measurement data. For example, the indoor positioning device compares expected measurement data (coming from the NN) with the measurement data obtained for storing or transmitting to a data repository.

In one or more example indoor positioning devices, the indoor positioning device 600 is configured to adjust the measurement data by generating first expected measurement data using a fingerprinting classifier applied to the measurement data. This may be seen as a first adjustment. The measurement data for example includes RSS measurements collected at known locations, such as beacon locations, in an environment (e.g., a map). The first expected measurement data may be given by $R_{t,n}$ which is generated at a time $t$ and used in Equation 7.

In one or more example indoor positioning devices, the fingerprinting classifier comprises a supervised learning model. In one or more examples, the supervised learning model can comprise one or more of: a linear model, a Linear and Quadratic Discriminant Analysis, QDA, model, a Kernel ridge regression, KRR, model, a Support vector machine, SVM, model, a Stochastic Gradient Descent, SGD, model, a Nearest Neighbour, NN, model, a Gaussian Process, GP, model, a cross decomposition model, a Bayes model, a Decision Tree, DT, model, an ensemble model, a multiclass and multioutput model, a feature selection model, a semi-supervised learning model, an isotonic regression model, a probability calibration model, and a neural network model.

In one or more examples, the fingerprinting classifier may be a trained classifier. The fingerprinting classifier may be trained based on the measurement data obtained from the one or more beacons (such as, a stationary device located at a known location). For example, the fingerprinting classifier may be seen as a k-NN regressor, which has been trained based on a reference dataset with known locations of one or more beacons and a wireless device position. The first expected measurement data may be generated using a k-Nearest Neighbor, k-NN, regressor applied to the measurement data, wherein k is a positive integer. For example, the first expected measurement data can be seen as expected RSS measurements, such as RSS measurements generated using a weighted sum of the k-NN in the training data.

In one or more example indoor positioning devices, the indoor positioning device 600 is configured to adjust the measurement data by generating second expected measurement data using a propagation model applied to the measurement data. In one or more example indoor positioning devices, the propagation model comprises a Path Loss Model. In one or more examples, the indoor positioning device 600 can generate the second expected measurement data using a path loss model of Equation 1. The path loss model may comprise an ITU indoor propagation model and/or ITU transmission loss models (in ITU-R P.1238-11) and/or a log distance path loss model. The second expected measurement data (such as, at a time $t$) which can be calculated by Equation 3 and distance parameter $d_i = \|\hat{x}_t - B_i\|_2$, where $i = 0, \dots, N - 1$, that denotes the distance parameter between the estimated position of the wireless device $\hat{x}_t$ and the location of the one or more beacons $B_i$. The updated position of the wireless device may be determined by using Equation 8.

In one or more example indoor positioning devices, the determination of the updated position and/or the updated distance parameter associated with the wireless device comprises comparing the first expected measurement data and/or the second expected measurement with the measurement data.

In one or more example indoor positioning devices, the determination of the updated position and/or the updated distance parameter associated with the wireless device comprises determining the updated position and/or the updated distance parameter based on the comparison of the first expected measurement data and/or the second expected measurement with the measurement data. The adjusted measurement data includes the first expected measurement data and/or the second expected measurement data.

In one or more example indoor positioning devices, the sensor data comprises data from an inertial measurement unit, and/or a pressure sensor. In one or more examples, an inertial measurement unit, IMU, can include one or more of: an accelerometer, a gyroscope, and a magnetometer. Stated differently, the sensor data may comprise acceleration, gyroscopic, and magnetometer data. In one or more examples, the pressure sensor can be used to estimate vertical movements of the wireless device, such as when using an elevator and/or escalator.

In one or more example indoor positioning devices, the indoor positioning device 600 is configured to provide, to a data repository, positioning data. In one or more example indoor positioning devices, the positioning data include one or more of: the updated position associated with the wireless device, the updated distance parameter associated with the wireless device, the adjusted measurement data associated with a corresponding beacon of the one or more beacons, a beacon location, a beacon position, and a timestamp of the storing. The positioning data can optionally comprise statistical properties of a signal, such as one or more of a mean, a median, and a variance associated with the adjusted measurement data.

In one or more examples, the data repository can be one or more of: a tree structure, a quad tree, a hash table, a plain text file, a database such as, a Database, and/or a NoSQL Database. The data repository may be data repository 508, 558 of Figs. 3A-3B.

An indoor environment can be covered by a map in a grid, such as a $1 \times 1$m grid and the measurement data can be captured for a specific grid location, to reduce the amount of data by averaging at that location.

In one or more example indoor positioning devices, any of the first, estimated, updated position of the wireless device comprises one or more of: a direction of the wireless device, a geographic position of the wireless device, and coordinates of the wireless device in a reference system.

In one or more example indoor positioning devices, the fingerprinting classifier is configured to obtain the positioning data from the data repository and to generate the first expected measurement data based on the positioning data.

In some examples, where UWB is used, the indoor positioning device 600 may determine the updated distance parameter by relying on ranging measurements (such as, Time of Flight, TOF, and/or Time Difference of Arrival, TDOA, measurements) instead of relying on signal strength measurements (such as, RSS measurements). The disclosed technique may allow a compensation in the ranging measurements, such as in one or more distances between the one or more beacons (such as, anchors) and the wireless device. In some examples, the indoor positioning device 600 can report to the wireless device that a ranging measurement may not be accurate. The indoor positioning device 600 may adjust such inaccurate ranging measurement or disregard it (such as, by not updating a databased with such inaccurate ranging measurement).

Processor circuitry 602 is optionally configured to perform any of the operations disclosed in Figs. 5A-5B (such as any one or more of: S102, S103, S103A, S104, S106, S106A, S106AA, S106B, S106C, S108, S108A, S108B, S110, S112, S114). The operations of the indoor positioning device 600 may be embodied in the form of executable logic routines (for example, lines of code, software programs, etc.) that are stored on a non-transitory computer readable medium (for example, memory circuitry 601) and are executed by processor circuitry 602).

Furthermore, the operations of the indoor positioning device 600 may be considered a method that the indoor positioning device 600 is configured to carry out. Also, while the described functions and operations may be implemented in software, such functionality may also be carried out via dedicated hardware or firmware, or some combination of hardware, firmware and/or software.

Memory circuitry 601 may be one or more of: a buffer, a flash memory, a hard drive, a removable media, a volatile memory, a non-volatile memory, a random access memory (RAM), and any other suitable device. In a typical arrangement, memory circuitry 601 may include a non-volatile memory for long term data storage and a volatile memory that functions as system memory for processor circuitry 602. Memory circuitry 601 may exchange data with processor circuitry 602 over a data bus. Control lines and an address bus between memory circuitry 601 and processor circuitry 602 also may be present (not shown in Fig. 4). Memory circuitry 601 is considered a non-transitory computer readable medium.

Memory circuitry 601 may be configured to store sensor data, measurement data, a first position of the wireless device, first expected measurement data, second expected measurement data, one or more sensor estimates, an estimated position of the wireless device, an updated position and/or an updated distance parameter associated with the wireless device in a part of the memory.

Figs. 5A-5B illustrate a flow-chart of an example method 100, performed by an indoor positioning device according to the disclosure. The indoor positioning device is the indoor positioning device disclosed herein, such as indoor positioning device 600 of Fig. 2A-B, and Fig. 4.

The method 100 comprises obtaining S102, from one or more sensors of a wireless device, sensor data associated with the wireless device at a first position. The method 100 comprises obtaining S104, from one or more beacons, measurement data indicative of a distance parameter of the wireless device at the first position. The method 100 comprises adjusting S106 the measurement data by predicting S106A, based on the sensor data and the measurement data, an estimated position of the wireless device. The method 100 comprises determining S108, based on the adjusted measurement data and the estimated position of the wireless device, an updated position and/or an updated distance parameter associated with the wireless device.

In one or more example methods, predicting S106A an estimated position of the wireless device comprises applying S106AA an estimation function to the sensor data and the measurement data.

In one or more example methods, the estimation function comprises one or more of: a Kalman Filter, an Unscented Kalman Filter, an Extended Kalman Filter, a Particle filter, and a neural network.

In one or more example methods, the estimation function takes as input the first position of the wireless device.

In one or more example methods, adjusting S106 the measurement data comprises generating first expected measurement data S106B using a fingerprinting classifier applied to the measurement data.

In one or more example methods, the fingerprinting classifier comprises a supervised learning model.

In one or more example methods, adjusting S106 the measurement data comprises generating S106C second expected measurement data using a propagation model applied to the measurement data. In one or more example methods, the propagation model comprises a Path Loss Model.

In one or more example methods, determining S108 the updated position and/or the updated distance parameter associated with the wireless device comprises comparing S108A the first expected measurement data and/or the second expected measurement with the measurement data.

In one or more example methods, determining S108 the updated position and/or the updated distance parameter associated with the wireless device comprises determining S108B the updated position and/or the updated distance parameter based on the comparison of the first expected measurement data and/or the second expected measurement with the measurement data.

In one or more example methods, the sensor data comprises data from an inertial measurement unit, and/or a pressure sensor.

In one or more example methods, the sensor data comprises one or more sensor estimates associated with the wireless device. In one or more example methods, the one or more sensor estimates comprise one or more of: a speed, a distance, and a direction. In one or more example methods, the method 100 comprises determining S103 the one or more sensor estimates based on the sensor data.

In one or more example methods, determining S103 the one or more sensor estimates comprises applying S103A a Pedestrian Dead Reckoning function to the sensor data.

In one or more example methods, the distance parameter comprises a received signal strength and/or a distance estimate.

In one or more example methods, the method 100 comprises providing S110, to a data repository, positioning data. In one or more example methods, the positioning data include one or more of: the updated position associated with the wireless device, the updated distance parameter associated with the wireless device, the adjusted measurement data associated with a corresponding beacon of the one or more beacons, a beacon location, a beacon position, and a timestamp of the storing.

In one or more example methods, any of the first, estimated, updated position of the wireless device comprises one or more of: a direction of the wireless device, a geographic position of the wireless device, and coordinates of the wireless device in a reference system.

In one or more example methods, the method 100 comprises obtaining S112 the positioning data from the data repository and generating S114 the first expected measurement data based on the positioning data.

In one or more example methods, the indoor positioning device is a user device and/or a server device.

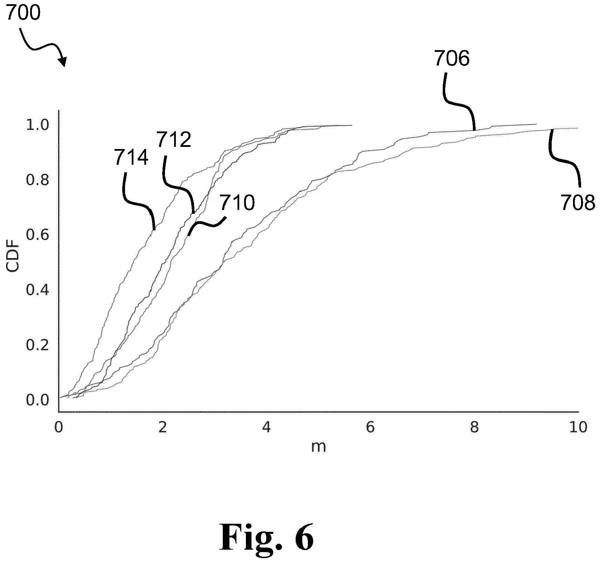

Fig. 6 shows a graph 700 illustrating a plurality of cumulative density functions, CDFs, of the positioning error in meters for a plurality of positioning techniques.

Curve 706 illustrates the CDF when the multilateration is used for positioning a wireless device. Curve 708 illustrate the CDF when the fingerprinting is used for positioning a wireless device. Curve 710 illustrate the CDF when the sensor fusion with UKF and PDF is used for positioning a wireless device. Curves 712 and 714 illustrate CDFs for the disclosed technique when the measurement data is adjusted offline and online, respectively. The disclosed technique may be seen as a sensor fusion-based technique, in which measurement data obtained from one or more beacons is adjusted based on training data.

Table 1 illustrates the plurality of CDFs evaluated at 50% and 80%. Put differently, Table 1 illustrates a plurality of positioning errors in meters associated with the plurality of CDFs evaluated at 50% and 80%, such as when CDF=50% and CDF=80%.

Table 1:

| Curves | CDF=50% | CDF=80% |
|--------|---------|---------|
| **706** | 3.16 | 5.06 |
| **708** | 3.19 | 5.17 |
| **710** | 2.15 | 2.97 |
| **712** | 2.06 | 3.07 |
| **714** | 1.44 | 2.48 |

Fig. 6 and Table 1 show that the disclosed technique with online adjustment of the measurement data represented by curve 714 enables a higher accuracy than the sensor fusion technique represented by curve 710, with a CDF50 of 1.44m. The fingerprinting represented by curve 708 and the multilateration technique represented by curve 706 are not able to provide an accurate position of a wireless device, in comparison with remaining techniques. Since the one or more beacons may be battery powered, advertisement frequency associated with the one or more beacons is set to 1Hz to ensure energy conservation. In addition, the fingerprinting technique may be unable to estimate a position of the wireless device corresponding to locations which are not included in a trained parameter space and/or in training data. For example, a small part of the testing data has been collected in the corridors, whereas the training data has not. The fingerprinting algorithm may not be able to predict, based on the training data, such locations in the testing data. On the other hand, the sensor fusion technique combines low rate beacon advertisements with high rate sensor data sampling. However, the sensor fusion technique may be vulnerable to a path loss component (such as, $\gamma$ coefficient) which is used to model the shadowing noise for the one or more beacons.

Fig. 6 shows that for curves 712, 714, the sensor fusion-based technique may not be dependent on the path loss component, since an indoor positioning device is configured to adjust the measurement data (such as, the RSS measurements) to be similar to ground truth values for the one or more locations. It may be envisaged that a CDF which reaches higher probability values faster provides an accurate position of a wireless device, thus providing lesser positioning errors. When comparing curve 712 with curve 714, it is observed that adjusting the measurement data online enables an accurate positioning of the wireless device, since an updated position of the wireless device and/or measurement data associated with the updated position of the wireless device may be stored in a database to be used for future adjustments. Moreover, adjusting the measurement data online enables to have training data covering as many locations as possible of a test environment, such as an environment where the indoor positioning device is configured for determining a position of the wireless device.

Examples of methods and products (indoor positioning device) according to the disclosure are set out in the following items:

Item 1. An indoor positioning device comprising memory circuitry, processor circuitry and an interface, wherein the indoor positioning device is configured to:

- obtain, from one or more sensors of a wireless device, sensor data associated with the wireless device at a first position;

- obtain, from one or more beacons, measurement data indicative of a distance parameter of the wireless device at the first position;

- adjust the measurement data by predicting, based on the sensor data and the measurement data, an estimated position of the wireless device; and

- determine, based on the adjusted measurement data and the estimated position of the wireless device, an updated position and/or an updated distance parameter associated with the wireless device.

Item 2. The indoor positioning device according to item 1, wherein the prediction of the estimated position of the wireless device comprises applying an estimation function to the sensor data and the measurement data.

Item 3. The indoor positioning device according to item 2, wherein the estimation function comprises one or more of: a Kalman Filter, an Unscented Kalman Filter, an Extended Kalman Filter, a Particle filter, and a neural network.

Item 4. The indoor positioning device according to any of items 1-3, wherein the estimation function takes as input the first position of the wireless device.

Item 5. The indoor positioning device according to any of the previous items, wherein the indoor positioning device is configured to adjust the measurement data by generating first expected measurement data using a fingerprinting classifier applied to the measurement data.

Item 6. The indoor positioning device according to item 5, wherein the fingerprinting classifier comprises a supervised learning model.

Item 7. The indoor positioning device according to any of the previous items, wherein the indoor positioning device is configured to adjust the measurement data by generating second expected measurement data using a propagation model applied to the measurement data.

Item 8. The indoor positioning device according to item 7, wherein the propagation model comprises a Path Loss Model.

Item 9. The indoor positioning device according to items 5 and 7 in combination with any of items 6 and 8, wherein the determination of the updated position and/or the updated distance parameter associated with the wireless device comprises:

- comparing the first expected measurement data and/or the second expected measurement with the measurement data; and

- determining the updated position and/or the updated distance parameter based on the comparison of the first expected measurement data and/or the second expected measurement with the measurement data.

Item 10. The indoor positioning device according to any of previous items, wherein the sensor data comprises data from an inertial measurement unit, and/or a pressure sensor.

Item 11. The indoor positioning device according to any of previous items, wherein the sensor data comprises one or more sensor estimates associated with the wireless device, the one or more sensor estimates comprising one or more of: a speed, a distance, and a direction, wherein the indoor positioning device is configured to determine the one or more sensor estimates based on the sensor data.

Item 12. The indoor positioning device according to item 11, wherein the indoor positioning device is configured to determine the one or more sensor estimates by applying a Pedestrian Dead Reckoning function to the sensor data.

Item 13. The indoor positioning device according to any of previous items, wherein the distance parameter comprises a received signal strength and/or a distance estimate.

Item 14. The indoor positioning device according to any of previous items, wherein the indoor positioning device is configured to provide, to a data repository, positioning data including one or more of:

- the updated position associated with the wireless device;

- the updated distance parameter associated with the wireless device;

- the adjusted measurement data associated with a corresponding beacon of the one or more beacons;

- a beacon location;

- a beacon position; and

- a timestamp of the storing.

Item 15. The indoor positioning device according to any of previous items, wherein any of the first, estimated, updated position of the wireless device comprises one or more of: a direction of the wireless device, a geographic position of the wireless device, and coordinates of the wireless device in a reference system.

Item 16. The indoor positioning device according to items 5 and 14 and any of items 6-13, 15, wherein the fingerprinting classifier is configured to obtain the positioning data from the data repository and to generate the first expected measurement data based on the positioning data.

Item 17. The indoor positioning device according to any of previous items, wherein the indoor positioning device is a user device and/or a server device.

Item 18. A method, performed by an indoor positioning device, the method comprising:

- obtaining (S102), from one or more sensors of a wireless device, sensor data associated with the wireless device at a first position;

- obtaining (S104), from one or more beacons, measurement data indicative of a distance parameter of the wireless device at the first position;

- adjusting (S106) the measurement data by predicting (S106A), based on the sensor data and the measurement data, an estimated position of the wireless device; and

- determining (S108), based on the adjusted measurement data and the estimated position of the wireless device, an updated position and/or an updated distance parameter associated with the wireless device.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figures comprise some circuitries or operations which are illustrated with a solid line and some circuitries, components, features, or operations which are illustrated with a dashed line. Circuitries or operations which are comprised in a solid line are circuitries, components, features, or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the examples may be implemented at least in part by means of both hardware and software, and that several "means", "units" or "devices" may be represented by the same item of hardware.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than or equal to 10% of, within less than or equal to 5% of, within less than or equal to 1% of, within less than or equal to 0.1% of, and within less than or equal to 0.01% of the stated amount. If the stated amount is 0 (e.g., none, having no), the above recited ranges can be specific ranges, and not within a particular % of the value.

The various example methods, devices, nodes, and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

**Claims**

1. An indoor positioning device comprising memory circuitry, processor circuitry and an interface, wherein the indoor positioning device is configured to:

    - obtain, from one or more sensors of a wireless device, sensor data associated with the wireless device at a first position;
    - obtain, from one or more beacons, measurement data indicative of a distance parameter of the wireless device at the first position;
    - adjust the measurement data by predicting, based on the sensor data and the measurement data, an estimated position of the wireless device; and
    - determine, based on the adjusted measurement data and the estimated position of the wireless device, an updated position and/or an updated distance parameter associated with the wireless device.

2. The indoor positioning device according to claim 1, wherein the prediction of the estimated position of the wireless device comprises applying an estimation function to the sensor data and the measurement data.

3. The indoor positioning device according to claim 2, wherein the estimation function comprises one or more of: a Kalman Filter, an Unscented Kalman Filter, an Extended Kalman Filter, a Particle filter, and a neural network.

4. The indoor positioning device according to any of claims 1-3, wherein the estimation function takes as input the first position of the wireless device.

5. The indoor positioning device according to any of the previous claims, wherein the indoor positioning device is configured to adjust the measurement data by generating first expected measurement data using a fingerprinting classifier applied to the measurement data.

6. The indoor positioning device according to claim 5, wherein the fingerprinting classifier comprises a supervised learning model.

7. The indoor positioning device according to any of the previous claims, wherein the indoor positioning device is configured to adjust the measurement data by generating second expected measurement data using a propagation model applied to the measurement data.

8. The indoor positioning device according to claim 7, wherein the propagation model comprises a Path Loss Model.

9. The indoor positioning device according to claims 5 and 7 in combination with any of claims 6 and 8, wherein the determination of the updated position and/or the updated distance parameter associated with the wireless device comprises:

    - comparing the first expected measurement data and/or the second expected measurement with the measurement data; and

    - determining the updated position and/or the updated distance parameter based on the comparison of the first expected measurement data and/or the second expected measurement with the measurement data.

10. The indoor positioning device according to any of previous claims, wherein the sensor data comprises data from an inertial measurement unit, and/or a pressure sensor.

11. The indoor positioning device according to any of previous claims, wherein the sensor data comprises one or more sensor estimates associated with the wireless device, the one or more sensor estimates comprising one or more of: a speed, a distance, and a direction, wherein the indoor positioning device is configured to determine the one or more sensor estimates based on the sensor data.

12. The indoor positioning device according to claim 11, wherein the indoor positioning device is configured to determine the one or more sensor estimates by applying a Pedestrian Dead Reckoning function to the sensor data.

13. The indoor positioning device according to any of previous claims, wherein the distance parameter comprises a received signal strength and/or a distance estimate.

14. The indoor positioning device according to any of previous claims, wherein the indoor positioning device is configured to provide, to a data repository, positioning data including one or more of:

    - the updated position associated with the wireless device;

- the updated distance parameter associated with the wireless device;
- the adjusted measurement data associated with a corresponding beacon of the one or more beacons;
- a beacon location;
- a beacon position; and
- a timestamp of the storing.

15. The indoor positioning device according to any of previous claims, wherein any of the first, estimated, updated position of the wireless device comprises one or more of: a direction of the wireless device, a geographic position of the wireless device, and coordinates of the wireless device in a reference system.

16. The indoor positioning device according to claims 5 and 14 and any of claims 6-13, 15, wherein the fingerprinting classifier is configured to obtain the positioning data from the data repository and to generate the first expected measurement data based on the positioning data.

17. The indoor positioning device according to any of previous claims, wherein the indoor positioning device is a user device and/or a server device.

18. A method, performed by an indoor positioning device, the method comprising:

   - obtaining (S102), from one or more sensors of a wireless device, sensor data associated with the wireless device at a first position;
   - obtaining (S104), from one or more beacons, measurement data indicative of a distance parameter of the wireless device at the first position;
   - adjusting (S106) the measurement data by predicting (S106A), based on the sensor data and the measurement data, an estimated position of the wireless device; and
   - determining (S108), based on the adjusted measurement data and the estimated position of the wireless device, an updated position and/or an updated distance parameter associated with the wireless device.

**Fig. 1A**

## Fig. 1B

## Fig. 1C

1

800A

14

800B

12

300

600

Fig. 2A

2

800A

400

600

14

10

800B

300

12

**Fig. 2B**

500

**Fig. 3A**

**Fig. 3B**

600

603

602

601

**Fig. 4**

100

S102 Obtaining, from one or more sensors of a wireless device, sensor data

S103 Determining one or more sensor estimates

S103A

S104 Obtaining, from one or more beacons, measurement data

S106 Adjusting the measurement data

S106A

S106AA

S106B

S106C

S108 Determining an updated position and/or an updated distance parameter

S108A

S108B

A

# Fig. 5A

100

A

S110 Providing, to a data repository, positioning data

S112 Obtaining the positioning data from the data repository

S114 Generating the first expected measurement data

# Fig. 5B

Fig. 6

Europäisches
Patentamt

European
Patent Office

Office européen
des brevets

# EUROPEAN SEARCH REPORT

Application Number

EP 23 21 1137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ENGSTROM JIMMY: "Improving Indoor Positioning With Adaptive Noise Modeling", IEEE ACCESS, IEEE, USA, vol. 8, 17 December 2020 (2020-12-17), pages 227213-227221, XP011828523, DOI: 10.1109/ACCESS.2020.3045615 [retrieved on 2020-12-28] * the whole document * | 1-18 | INV. G01S5/02 G01S5/14 ADD. G01C21/20 |
| X | CN 112 729 301 A (UNIV SHENZHEN) 30 April 2021 (2021-04-30) * the whole document * | 1-18 | |
| X | US 10 671 921 B1 (KARON JOSHUA [CA] ET AL) 2 June 2020 (2020-06-02) * the whole document * | 1-18 | |
| X | US 10 641 610 B1 (KARON JOSHUA [CA] ET AL) 5 May 2020 (2020-05-05) * the whole document * | 1-18 | |
| A | SUBEDI SANTOSH ET AL: "Improved Smartphone-Based Indoor Localization System Using Lightweight Fingerprinting and Inertial Sensors", IEEE ACCESS, IEEE, USA, vol. 9, 5 April 2021 (2021-04-05), pages 53343-53357, XP011849431, DOI: 10.1109/ACCESS.2021.3070837 [retrieved on 2021-04-09] * the whole document * | 1-18 | TECHNICAL FIELDS SEARCHED (IPC) G01S H04W G01C |

-/--

The present search report has been drawn up for all claims

| Place of search | Date of completion of the search | Examiner |
|---|---|---|
| Munich | 22 April 2024 | Ribbe, Jonas |

Europäisches
Patentamt

European
Patent Office

Office européen
des brevets

# EUROPEAN SEARCH REPORT

Application Number

EP 23 21 1137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAVIDSON PAVEL ET AL: "A Survey of Selected Indoor Positioning Methods for Smartphones", IEEE COMMUNICATIONS SURVEYS & TUTORIALS, vol. 19, no. 2, 2 June 2017 (2017-06-02), pages 1347-1370, XP011651807, DOI: 10.1109/COMST.2016.2637663 [retrieved on 2017-06-02] * the whole document * | 1-18 | |
| A | EP 4 001 948 A1 (NAVER CORP [KR]; NAVER LABS CORP [KR]) 25 May 2022 (2022-05-25) * the whole document * | 1-18 | |

TECHNICAL FIELDS SEARCHED (IPC)

The present search report has been drawn up for all claims

| Place of search | Date of completion of the search | Examiner |
|---|---|---|
| Munich | 22 April 2024 | Ribbe, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 1137

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2024

| Patent document cited in search report | | Publication date | Patent family member(s) | | Publication date |
|---|---|---|---|---|---|
| CN 112729301 | A | 30-04-2021 | NONE | | |
| US 10671921 | B1 | 02-06-2020 | CA | 3077683 A1 | 01-11-2020 |
| | | | US | 10671921 B1 | 02-06-2020 |
| US 10641610 | B1 | 05-05-2020 | CA | 3076139 A1 | 21-05-2020 |
| | | | US | 10641610 B1 | 05-05-2020 |
| EP 4001948 | A1 | 25-05-2022 | EP | 4001948 A1 | 25-05-2022 |
| | | | EP | 4194881 A1 | 14-06-2023 |
| | | | JP | 7339314 B2 | 05-09-2023 |
| | | | JP | 2022078967 A | 25-05-2022 |
| | | | KR | 20220065672 A | 20-05-2022 |
| | | | US | 2022155079 A1 | 19-05-2022 |

EPO FORM P0459

For more details about this annex : see Official Journal of the European Patent Office, No. 12/82